# EUROPEAN PATENT SPECIFICATION

(11) **EP 3 415 869 B1**
(45) Date of publication and mention of the grant of the patent: **24.03.2021**
(21) Application number: 18177950.5
(22) Date of filing: 15.06.2018
(51) Int. Cl.: G01C 22/00, G01C 21/16, G01S 19/47

(54) **ELECTRONIC DEVICE FOR IMPROVING DEAD RECKONING-BASED POSITIONING ACCURACY**
ELEKTRONISCHE VORRICHTUNG ZUR VERBESSERUNG DER POSITIONIERGENAUIGKEIT AUF KOPPELNAVIGATIONSBASIS
DISPOSITIF ÉLECTRONIQUE POUR AMÉLIORER LA PRÉCISION DE POSITIONNEMENT BASÉE SUR LA NAVIGATION À L'ESTIME

(30) Priority: 16.06.2017 JP 2017118938
(43) Date of publication of application: 19.12.2018
(73) Proprietor: Casio Computer Co., Ltd., Tokyo 151-8543 (JP)
(72) Inventor: TODA, Naoto, Hamura-shi, Tokyo 205-8555 (JP)
(74) Representative: Plougmann Vingtoft a/s

(56) References cited:
- DE-A1- 19 860 603

## Description

### BACKGROUND OF THE INVENTION

### Field of the Invention

The present invention relates to an electronic device for improving the accuracy of dead reckoning-based positioning.

### Background Art

In recent years, positioning technologies which calculate position using a combination of dead reckoning-based positioning and positioning based on radio waves from navigation satellites have become well-known.

For example, Japanese Patent Application Laid-Open Publication No. 2012-117975 discloses a technology which, in order to reduce accumulation of positioning error in a mobile device having a dead reckoning feature, corrects step length on the basis of a distance measured from map information and a distance calculated using dead reckoning.
DE19860603 discloses a control section (11) determines points, by which the user walking is at an essentially highest position or step place, based on a value from a pedometer (12). The detector determines a specific movement direction at a specific point, which is assigned at least one of the points detected, and in addition is specified in a region between an arrival point of highest position and an arrival point of highest position of the successive step. The control section determines the position of the moving body, based on the stretch covered by the body determined based on the specific movement direction, which would be determined by a geomagnetic sensor (13).

### SUMMARY OF THE INVENTION

Accordingly, the present invention provides, in a first aspect, an electronic device according to claim 1.

In another aspect, the present invention provides a method of correcting an error in dead reckoning performed by a processor in an electronic device, according to claim 7.

In another aspect, the present invention provides a computer-readable non-transitory storage medium having stored thereon a program to be executable by a processor of an electronic device, according to claim 12.

The following detailed description is exemplary and explanatory, and is intended to provide further explanation of the invention as claimed.

### BRIEF DESCRIPTION OF THE DRAWINGS

FIG. 1 is a system configuration diagram illustrating a configuration of a positional information recording system S including a positional information obtaining device according to an embodiment of the present invention.
FIG. 2 is a schematic drawing illustrating an example of usage of the positional information recording system.
FIG. 3 is a block diagram illustrating a hardware configuration of the positional information obtaining device.
FIG. 4 is a block diagram illustrating a hardware configuration of a processing device 2.
FIG. 5 is a functional block diagram illustrating, among functional configurations of a positional information obtaining device 1, a functional configuration for executing a satellite positioning process, a dead reckoning process, a step length correction process, and a recording control process.
FIG. 6 is a schematic drawing illustrating how an estimated step length is corrected.
FIG. 7 is a functional block diagram illustrating, among functional configurations of the processing device, a functional configuration for executing a position display process.
FIG. 8 is a flowchart for explaining the flow of the satellite positioning process executed by the positional information obtaining device illustrated in FIG. 3 and having the functional configuration illustrated in FIG. 5.
FIG. 9 is a flowchart for explaining the flow of the dead reckoning process executed by the positional information obtaining device illustrated in FIG. 3 and having the functional configuration illustrated in FIG. 5.
FIG. 10 is a flowchart for explaining the flow of the step length correction process executed by the positional information obtaining device illustrated in FIG. 3 and having the functional configuration illustrated in FIG. 5.
FIG. 11 is a flowchart for explaining the flow of the recording control process executed by the positional information obtaining device illustrated in FIG. 3 and having the functional configuration illustrated in FIG. 5.
FIG. 12 is a flowchart for explaining the flow of the position display process executed by the processing device illustrated in FIG. 4 and having the functional configuration illustrated in FIG. 7.
FIG. 13A is a schematic drawing illustrating positioning results obtained using standalone dead reckoning as a measurement subject P travels along a mountaineering route R1.
FIG. 13B is a schematic drawing illustrating positioning results obtained using a dead reckoning implementation according to the present invention as the measurement subject P travels along the mountaineering route R1.
FIG. 14A is a schematic drawing illustrating positioning results obtained using standalone dead reckoning as the measurement subject P travels along a mountaineering route R2.
FIG. 14B is a schematic drawing illustrating positioning results obtained using the dead reckoning implementation according to the present invention as the measurement subject P travels along the mountaineering route R2.
FIG. 15A is a schematic drawing illustrating an example of displaying positioning results, as a movement history, obtained using standalone dead reckoning superimposed onto map data.
FIG. 15B is a schematic drawing illustrating an example of displaying positioning results, as a movement history, obtained using the dead reckoning implementation according to the present invention superimposed onto map data.

### DETAILED DESCRIPTION OF THE PREFERRED EMBODIMENTS

Next, embodiments of the present invention will be described with reference to the figures.

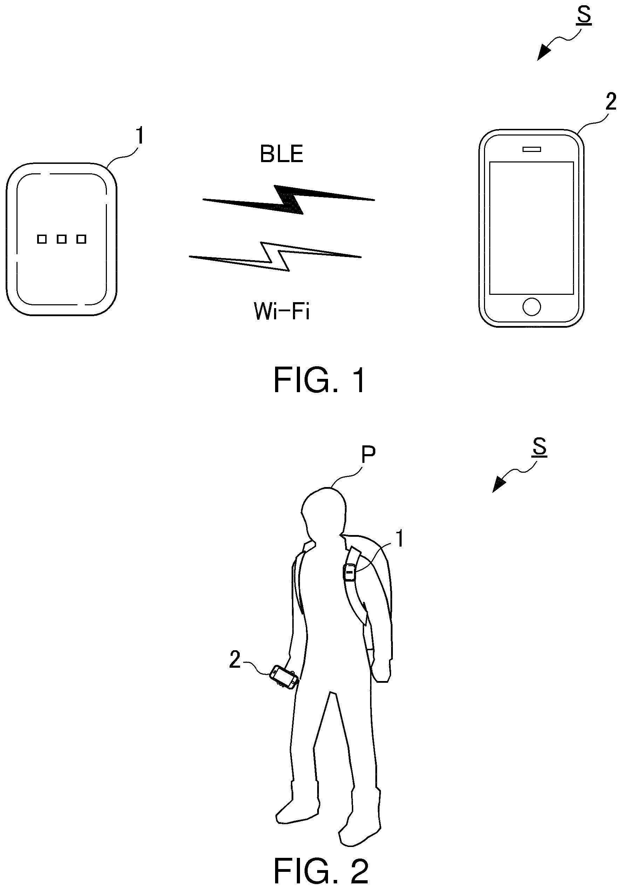

FIG. 1 is a system configuration diagram illustrating a configuration of a positional information recording system S including a positional information obtaining device 1 according to an embodiment of the present invention. Moreover, FIG. 2 is a schematic drawing illustrating an example of usage of the positional information recording system.

As illustrated in FIGs. 1 and 2, the positional information recording system S includes the positional information obtaining device 1 and a processing device 2. Moreover, the positional information obtaining device 1 and the processing device 2 are configured to be able to communicate via a wireless communication technology such as Bluetooth Low Energy/Bluetooth LE (registered trademark; hereinafter, "BLE") or Wi-Fi (registered trademark).

The positional information obtaining device 1 executes a satellite positioning process (described later) to determine position on the basis of radio waves from navigation satellites.

Moreover, the positional information obtaining device 1 functions as a sensor device including various types of sensors and can be attached to a measurement subject to sense movement of the measurement subject and obtain sensor information. Furthermore, the positional information obtaining device 1 executes a dead reckoning process (described later) to perform dead reckoning-based positioning using the obtained sensor information (such as acceleration and geomagnetism). In the present embodiment, the positional information obtaining device 1 is attached to a user (hereinafter, a "measurement subject P") engaged in an activity such as trekking in order to sense the movement of the measurement subject P. As one example, the positional information obtaining device 1 can be attached to the shoulder strap of a backpack carried by the measurement subject P.

Furthermore, the positional information obtaining device 1 executes a step length correction process (described later) to correct an estimated step length used when performing dead reckoning-based positioning. Furthermore, the positional information obtaining device 1 uses the corrected estimated step length to perform subsequent dead reckoning-based positioning. In addition, the positional information obtaining device 1 sends the corrected estimated step length to the processing device 2.

Moreover, the positional information obtaining device 1 executes a recording control process (described later) to select either positioning results based on radio waves from navigation satellites or positioning results based on dead reckoning and then record the selected results as positional information of the measurement subject P.

The processing device 2 obtains positional information of the measurement subject P output from the positional information obtaining device 1 and displays the position of the measurement subject P superimposed onto map data.

Moreover, when the estimated step length used for dead reckoning-based positioning is corrected as a result of the step length correction process executed by the positional information obtaining device 1, the processing device 2 receives the corrected estimated step length from the positional information obtaining device 1. The processing device 2 then uses the corrected estimated step length to correct positional information obtained from the positional information obtaining device 1 in the past.

### <Hardware Configuration>

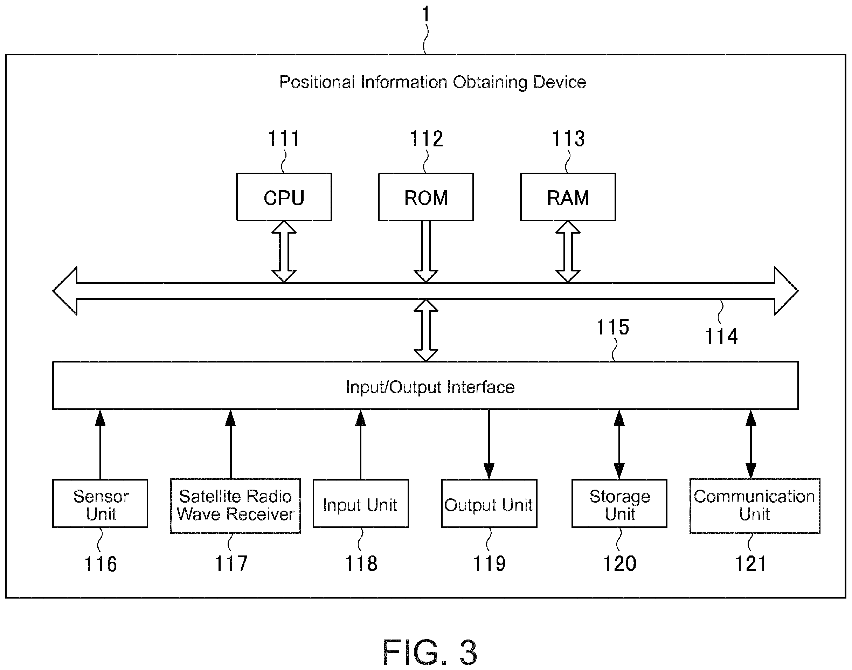

FIG. 3 is a block diagram illustrating a hardware configuration of the positional information obtaining device 1.

The positional information obtaining device 1 is an embodiment of an electronic device according to the present invention and here is configured as a sensor device including various types of sensors for detecting movement of a measurement subject.

As illustrated in FIG. 3, the positional information obtaining device 1 includes a central processing unit (CPU) 111, a read-only memory (ROM) 112, a random-access memory (RAM) 113, a bus 114, an input/output interface 115, a sensor unit 116, a satellite radio wave receiver 117, an input unit 118, an output unit 119, a storage unit 120, and a communication unit 121. Moreover, the positional information obtaining device 1 may be configured to accept a removable medium such as semiconductor memory.

The CPU 111 executes various processes in accordance with programs stored in the ROM 112 or programs loaded into the RAM 113 from the storage unit 120.

The RAM 113 also stores, as appropriate, any data or the like that the CPU 111 needs to execute these various processes.

The CPU 111, the ROM 112, and the RAM 113 are connected to one another via the bus 114. Moreover, the input/output interface 115 is also connected to the bus 114. The sensor unit 116, the satellite radio wave receiver 117, the input unit 118, the output unit 119, the storage unit 120, and the communication unit 121 are connected to the input/output interface 115.

The sensor unit 116 includes a three-axis acceleration sensor which detects acceleration in three axial directions, a three-axis angular velocity sensor which detects angular velocity in three axial directions, and a three-axis geomagnetic sensor which detects geomagnetism in three axial directions. The sensor unit 116 uses the three-axis acceleration sensor, the three-axis angular velocity sensor, and the three-axis geomagnetic sensor to detect acceleration, angular velocity, and geomagnetism in three axial directions at a prescribed sampling frequency (such as every 0.001 second). The acceleration, angular velocity, and geomagnetism data detected by the sensor unit 116 is associated with measurement time data, and then stored on the storage unit 120 or sent to the processing device 2. The sensor unit 116 can include various types of sensors (such as an atmospheric pressure sensor and an atmospheric temperature sensor) in addition to the three-axis acceleration sensor, the three-axis angular velocity sensor, and the three-axis geomagnetic sensor.

The satellite radio wave receiver 117 detects the position (latitude, longitude, and altitude) of the positional information obtaining device 1 as well as the current time on the basis of radio waves received from navigation satellites.

The input unit 118 is constituted by various types of buttons or the like and various types of information are input via the input unit 118 in accordance with input operations by the measurement subject P (user).

The output unit 119 is constituted by a light, a speaker, a vibration motor, or the like and outputs light, sound, or vibration signals.

The storage unit 120 is constituted by semiconductor memory such as dynamic random-access memory (DRAM) and stores various types of data.

The communication unit 121 controls communication with other devices performed using direct wireless communications therebetween. In the present embodiment, the communication unit 121 communicates with the processing device 2 using BLE (registered trademark) or Wi-Fi (registered trademark).

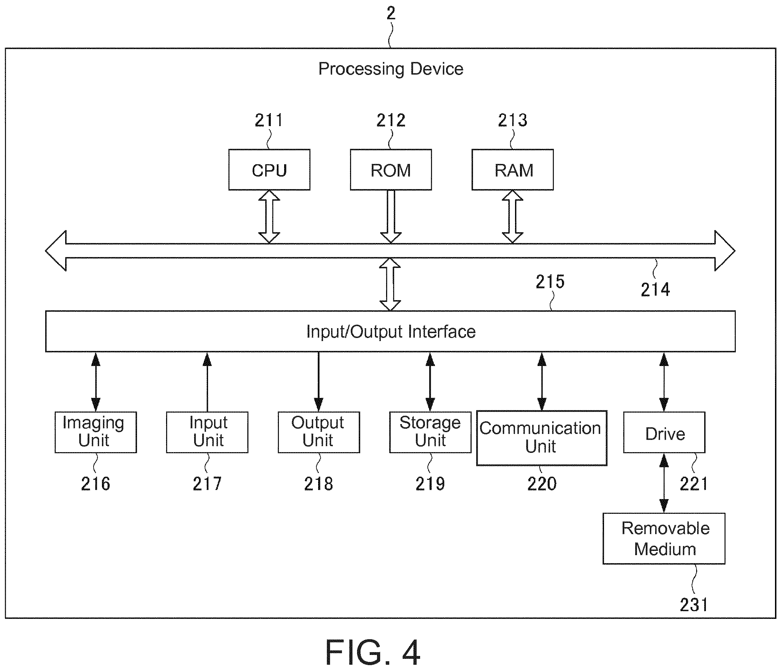

FIG. 4 is a block diagram illustrating a hardware configuration of the processing device 2.

The processing device 2 is an information processing device having an information display feature, such as a smartphone.

As illustrated in FIG. 4, the processing device 2 includes a CPU 211, a ROM 212, a RAM 213, a bus 214, an input/output interface 215, an imaging unit 216, an input unit 217, an output unit 218, a storage unit 219, a communication unit 220, and a drive 221.

Of these, the components other than the imaging unit 216, the input unit 217, the output unit 218, the communication unit 220, and the drive 221 are configured the same as the corresponding components in FIG. 3. Moreover, the processing device 2 can also include a component similar to the sensor unit 116 of the positional information obtaining device 1.

The imaging unit 216 includes components such as an optical lens unit, an image sensor, and an image processing circuit (not illustrated in the figure) and generates and supplies captured image data to the CPU 211 and the like as appropriate.

The input unit 217 is constituted by various types of buttons, a touch panel, or the like, and various types of information are input via the input unit 217 in accordance with input operations by the measurement subject P (user).

The output unit 218 is constituted by a display, speakers, or the like and outputs images or sound.

The communication unit 220 controls communication with other devices (not illustrated in the figure) via a network such as the internet. The communication unit 220 also controls communication with other devices performed using direct wireless communications therebetween. In the present embodiment, the communication unit 220 communicates with the positional information obtaining device 1 using BLE (registered trademark) or Wi-Fi (registered trademark).

The drive 221 accepts, as appropriate, a removable medium 231 such as a magnetic disk, an optical disc, a magneto-optical disc, or semiconductor memory. Programs read from the removable medium 231 by the drive 221 are installed to the storage unit 219 as necessary. Moreover, similar to the storage unit 219, the removable medium 231 can store various types of data such as the image data stored on the storage unit 219.

### <Functional Configuration>

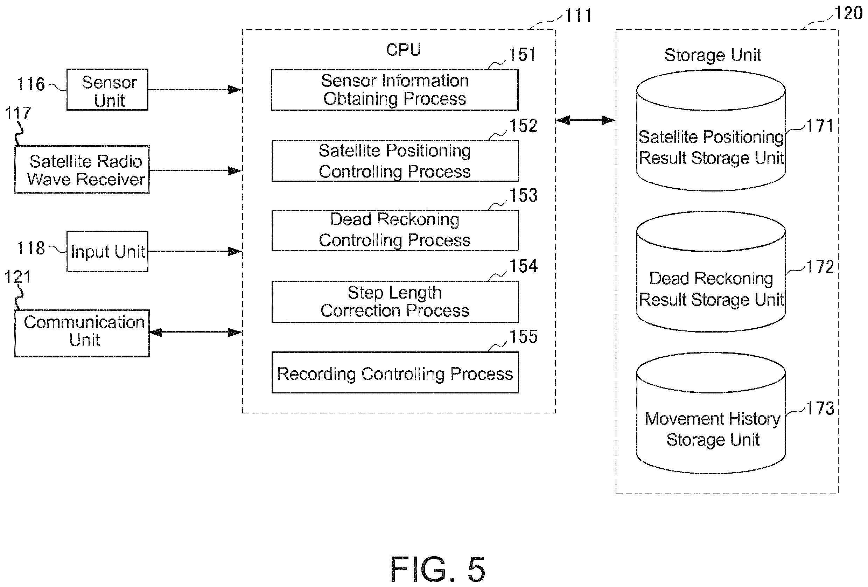

FIG. 5 is a functional block diagram illustrating, among functional configurations of the positional information obtaining device 1, a functional configuration for executing the satellite positioning process, the dead reckoning process, the step length correction process, and the recording control process.

The satellite positioning process is a sequence of processes for obtaining position on the basis of radio waves received from navigation satellites.

The dead reckoning process is a sequence of processes for performing dead reckoning-based positioning using sensor information (such as acceleration and geomagnetism) obtained by the sensors of the positional information obtaining device 1 in conjunction with an estimated step length of the measurement subject P.

Furthermore, the step length correction process is a sequence of processes for comparing positioning results from the dead reckoning process to positioning results from the satellite positioning process and then, on the basis of the comparison results, correcting the estimated step length of the measurement subject P used in the dead reckoning process.

The recording control process is a sequence of processes for selecting and recording, on the basis of the positioning accuracy of the satellite positioning process, either positioning results from the satellite positioning process or positioning results from the dead reckoning process.

As illustrated in FIG. 5, when executing the satellite positioning process, the dead reckoning process, the step length correction process, and the recording control process, the CPU 111 performs a sensor information obtaining process 151, a satellite positioning controlling process 152, a dead reckoning controlling process 153, a step length correction process 154, and a recording controlling process 155.

Moreover, a satellite positioning result storage unit 171, a dead reckoning result storage unit 172, and a movement history storage unit 173 are configured as regions of the storage unit 120.

The satellite positioning result storage unit 171 stores positioning results from the satellite positioning process in chronological order.

Similarly, the dead reckoning result storage unit 172 stores positioning results from the dead reckoning process in chronological order.

Moreover, the movement history storage unit 173 stores either the positioning results from the satellite positioning process or the positioning results from the dead reckoning process (as selected by the recording control process) in chronological order as a movement history of the measurement subject P.

The sensor information obtaining process 151 obtains sensor information from the various types of sensors of the sensor unit 116.

The satellite positioning controlling process 152 obtains, at a prescribed time interval (such as every one second) and on the basis of radio waves received from navigation satellites, satellite positioning-based positioning results including the position and altitude of the positional information obtaining device 1. The satellite positioning controlling process 152 also stores the obtained satellite positioning-based positioning results in the satellite positioning result storage unit 171. Furthermore, the satellite positioning controlling process 152 obtains positioning error as estimated from the reception status of the radio waves received from the navigation satellites (in terms of factors such as the arrangement of the navigation satellites, the C/N ratio of the received radio waves, and the number of satellites in view).

The dead reckoning controlling process 153 uses dead reckoning to obtain the position of the measurement subject P on the basis of the sensor information obtained from the sensor information obtaining process 151 and the estimated step length (as an initial setting value or a corrected value) of the measurement subject P. For example, the dead reckoning controlling process 153 calculates the travel distance of the measurement subject P by multiplying the number of steps taken by the measurement subject P (as identified from a waveform from the acceleration sensor) by the estimated step length of the measurement subject P. Moreover, the dead reckoning controlling process 153 identifies the movement direction of the measurement subject P from the detection results from the magnetic sensor. The dead reckoning controlling process 153 calculates the movement distance and movement direction of the measurement subject P in this manner at a prescribed time interval (such as every one second). Then, starting from a past positioning result for the measurement subject P as obtained using satellite positioning, the dead reckoning controlling process 153 cumulatively adds the movement distances calculated using the estimated step length in the movement directions identified from the detection results from the magnetic sensor in order to obtain dead reckoning-based positioning results. Furthermore, the dead reckoning controlling process 153 stores the obtained dead reckoning-based positioning results in the dead reckoning result storage unit 172.

The step length correction process 154 compares the positioning results obtained for two sites (locations) (comparison sites (comparison locations)) using satellite positioning to the positioning results obtained using dead reckoning between the same two sites. Then, in accordance with the differences between the positioning results for the two sites, the step length correction process 154 corrects the estimated step length of the measurement subject P used in the dead reckoning process and also sends the corrected estimated step length to the processing device 2. From the perspective of reducing error, the two sites used here are sites that are separated from one another by at least a prescribed distance (such as 100 m). Moreover, the two sites are sites which yield good positioning accuracy when using satellite positioning (that is, sites for which the positioning error is less than or equal to a prescribed value E1).

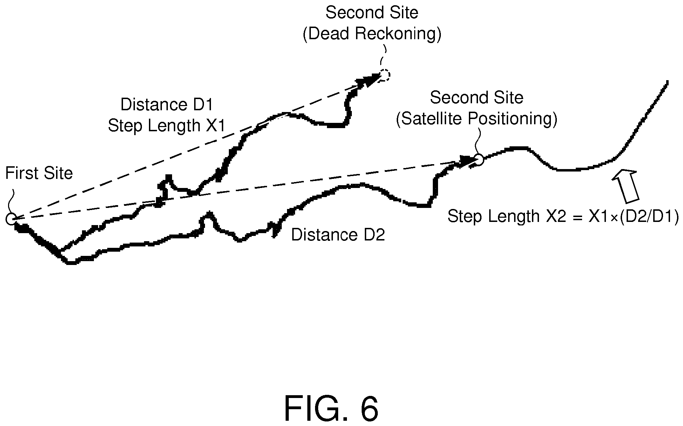

FIG. 6 is a schematic drawing illustrating how the estimated step length gets corrected.

As illustrated in FIG. 6, as the movement distances calculated using dead reckoning starting from the site (location) obtained with satellite positioning are cumulatively added in the movement directions identified from the detection results from the magnetic sensor, positioning result error which includes error in the estimated step length and error in the detection results from the magnetic sensor begins to accumulate. Therefore, in the present embodiment, upon reaching a second site obtained with satellite positioning, the positioning results obtained using dead reckoning are compared to the positioning results obtained using satellite positioning (with a first site obtained with satellite positioning being used as a reference) in order to correct the estimated step length of the measurement subject P used in the dead reckoning process. As one example of correcting the estimated step length, the ratio of the linear distance D2 between the first site and the second site as obtained using satellite positioning to the linear distance D1 between the first site and the second site as obtained using dead reckoning is multiplied with the step length X1 used for dead reckoning, thereby correcting the estimated step length to a corrected value X2. Moreover, in the present embodiment, movement direction is corrected by matching up the second site as obtained using dead reckoning with the second site as obtained using satellite positioning, with the first site being used as a reference.

Returning to FIG. 5, the recording controlling process 155 selects and records, on the basis of the positioning accuracy of the satellite positioning process, either positioning results from the satellite positioning process or positioning results from the dead reckoning process. In the present embodiment, when the positioning accuracy of the satellite positioning process is satisfactory (that is, when the positioning error is less than or equal to the prescribed value E1), the recording controlling process 155 selects the positioning result from the satellite positioning process and records this result as the current position of the measurement subject P. Meanwhile, when the positioning accuracy of the satellite positioning process is not satisfactory (that is, when the positioning error is greater than the prescribed value E1), the recording controlling process 155 selects the positioning result from the dead reckoning process and records this result as the current position of the measurement subject P. Furthermore, the recording controlling process 155 stores the selected positioning result in the movement history storage unit 173 and also sends this result to the processing device 2.

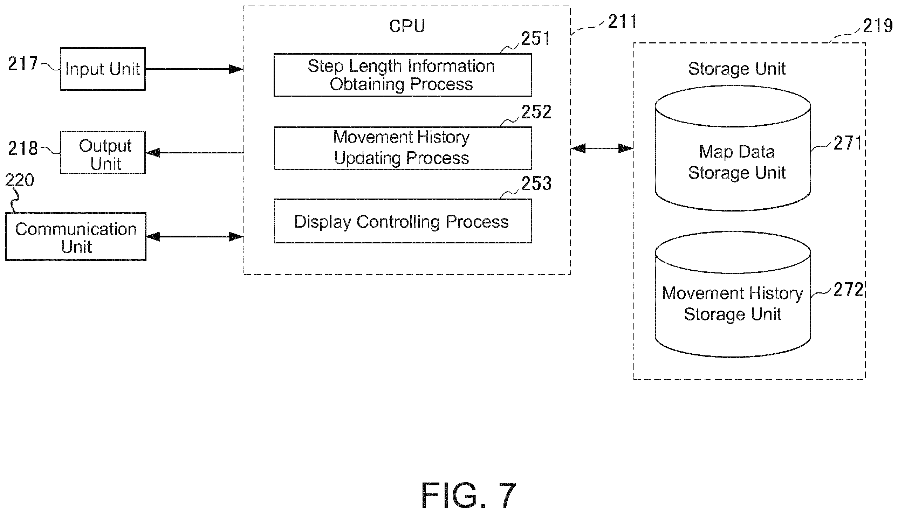

FIG. 7 is a functional block diagram illustrating, among functional configurations of the processing device 2, a functional configuration for executing a position display process.

The position display process is a sequence of processes for obtaining positional information of the measurement subject P output from the positional information obtaining device 1 and displaying the position of the measurement subject P superimposed onto map data.

As illustrated in FIG. 7, when executing the position display process, the CPU 211 performs a step length information obtaining process 251, a movement history updating process 252, and a display controlling process 253.

Moreover, a map data storage unit 271 and a movement history storage unit 272 are configured as regions of the storage unit 219.

The map data storage unit 271 stores map data for positions obtained with satellite positioning or dead reckoning to be displayed on in a superimposed manner.

The movement history storage unit 272 stores positioning results received from the positional information obtaining device 1 (that is, from the recording controlling process 155 thereof) in chronological order as a movement history of the measurement subject P. Moreover, the estimated step length obtained by the step length information obtaining process 251 is stored in association with the movement history of the measurement subject P.

The step length information obtaining process 251 obtains the estimated step length values (initial setting value and corrected value) sent from the positional information obtaining device 1 (that is, from the step length correction process 154 thereof). The step length information obtaining process 251 also stores the obtained estimated step length values in the movement history storage unit 272 in association with the movement history of the measurement subject P.

When the step length information obtaining process 251 obtains an estimated step length (as a corrected value), the movement history updating process 252 uses this corrected estimated step length to recalculate the dead reckoning-based positioning results that has been calculated using the pre-correction estimated step length and then updates the movement history stored in the movement history storage unit 272 accordingly.

The display controlling process 253, in accordance with movement history display instructions input via the input unit 217, reads the movement history to be displayed from the movement history storage unit 272. The display controlling process 253 also reads map data for the area surrounding the movement history to be displayed from the map data storage unit 271. Then, the display controlling process 253 displays the movement history read from the movement history storage unit 272 or the movement history updated by the movement history updating process 252 in a superimposed manner onto the map data read from the map data storage unit 271.

### <Operation>

Next, the operation of the positional information recording system S will be described.

### <Satellite Positioning Process>

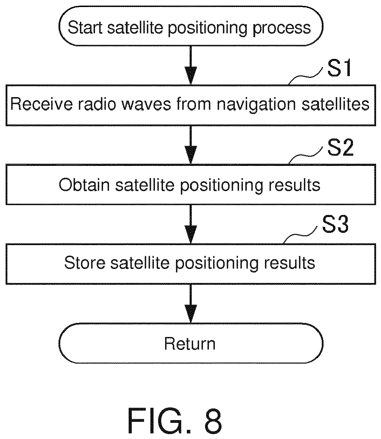

FIG. 8 is a flowchart for explaining the flow of the satellite positioning process executed by the positional information obtaining device 1 illustrated in FIG. 3 that has the functional configuration illustrated in FIG. 5.

The satellite positioning process begins when a satellite positioning process start instruction is input via the input unit 118.

In step S1, the satellite positioning controlling process 152 receives radio waves from navigation satellites.

In step S2, the satellite positioning controlling process 152 obtains, at a prescribed time interval (such as every one second) and on the basis of the received radio waves from the navigation satellites, satellite positioning results including the position and altitude of the positional information obtaining device 1.

In step S3, the satellite positioning controlling process 152 stores the obtained satellite positioning-based positioning results in the satellite positioning result storage unit 171.

After step S3, the satellite positioning process is repeated until a satellite positioning process stop instruction is input via the input unit 118.

### <Dead Reckoning Process>

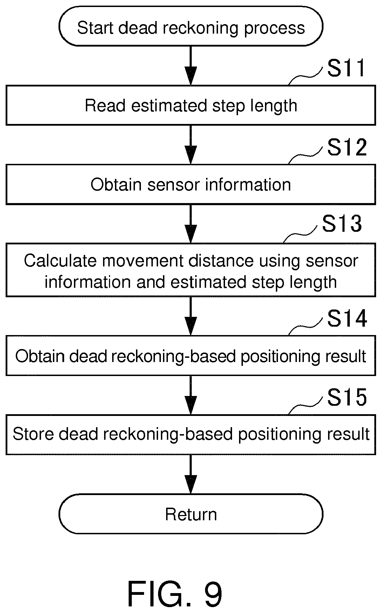

FIG. 9 is a flowchart for explaining the flow of the dead reckoning process executed by the positional information obtaining device 1 illustrated in FIG. 3 and having the functional configuration illustrated in FIG. 5.

The dead reckoning process begins when a dead reckoning process start instruction is input via the input unit 118.

In step S11, the dead reckoning controlling process 153 reads the estimated step length of the measurement subject P. Here, an initial setting value for the estimated step length of the measurement subject P is input via the input unit 118 prior to starting the dead reckoning process, and then the estimated step length of the measurement subject P is successively updated to a corrected value as the step length correction process is executed. A value equal to the height of the measurement subject P in centimeters minus 100 cm, for example, can be set as the initial setting value for the estimated step length of the measurement subject P.

In step S12, the sensor information obtaining process 151 obtains sensor information from the various types of sensors of the sensor unit 116.

In step S13, the dead reckoning controlling process 153 calculates the movement distance of the measurement subject P on the basis of the sensor information obtained from the sensor information obtaining process 151 and the estimated step length of the measurement subject P.

In step S14, the dead reckoning controlling process 153 obtains a dead reckoning-based positioning result for the measurement subject on the basis of the calculated movement distance of the measurement subject P and the movement direction of the measurement subject P that is identified from the detection results from the magnetic sensor.

In step S15, the dead reckoning controlling process 153 stores the obtained dead reckoning-based positioning result in the dead reckoning result storage unit 172.

After step S15, the dead reckoning process is repeated until a dead reckoning process stop instruction is input via the input unit 118.

### <Step Length Correction Process>

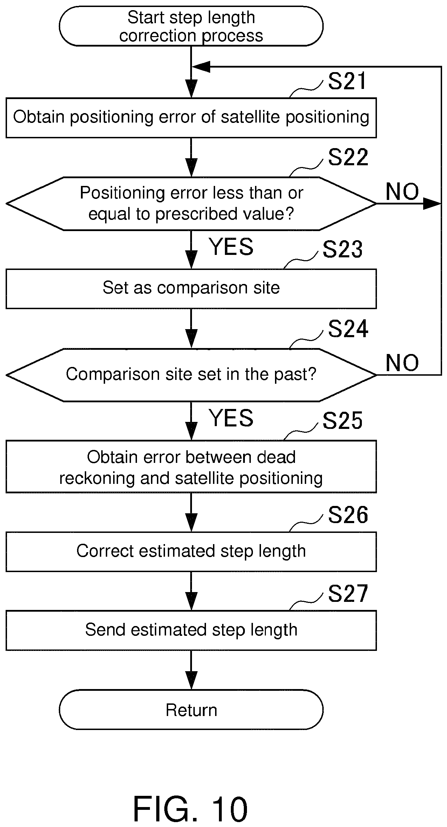

FIG. 10 is a flowchart for explaining the flow of the step length correction process executed by the positional information obtaining device 1 illustrated in FIG. 3 that has the functional configuration illustrated in FIG. 5.

The step length correction process begins when a step length correction process start instruction is input via the input unit 118.

In step S21, the step length correction process 154 obtains the positioning error in the satellite positioning obtained by the satellite positioning controlling process 152.

In step S22, the step length correction process 154 determines whether the positioning error in the satellite positioning is less than or equal to the prescribed value E1.

If the positioning error in the satellite positioning is not less than or equal to the prescribed value E1, the determination in step S22 yields NO, and the process returns to step S21.

On the other hand, if the positioning error in the satellite positioning is less than or equal to the prescribed value E1, the determination in step S22 yields YES, and the process proceeds to step S23.

In step S23, the step length correction process 154 sets a site obtained with satellite positioning as a comparison site for use in correcting step length.

In step S24, the step length correction process 154 determines whether a comparison site for use in correcting step length has been set in the past.

If no comparison site for use in correcting step length has been set in the past, the determination in step S24 yields NO, and the process returns to step S21.

On the other hand, if a comparison site for use in correcting step length has been set in the past, the determination in step S24 yields YES, and the process proceeds to step S25.

In step S25, using the comparison site set in the past for use in correcting step length as a first site (base site) and using the comparison site set in the current iteration for use in correcting step length as a second site, the step length correction process 154 compares the positioning results obtained with dead reckoning to the positioning results obtained with satellite positioning in order to obtain the error between the positioning results obtained with dead reckoning and the positioning results obtained with satellite positioning.

In step S26, the step length correction process 154 multiplies the ratio of the distance between the first site and the second site as obtained using satellite positioning to the distance between the first site and the second site as obtained using dead reckoning with the step length used for dead reckoning, thereby correcting the estimated step length. This updates the estimated step length to be used in the dead reckoning process.

In step S27, the step length correction process 154 sends the corrected estimated step length to the processing device 2.

After step S27, the step length correction process is repeated until a step length correction process stop instruction is input via the input unit 118.

### <Recording Control Process>

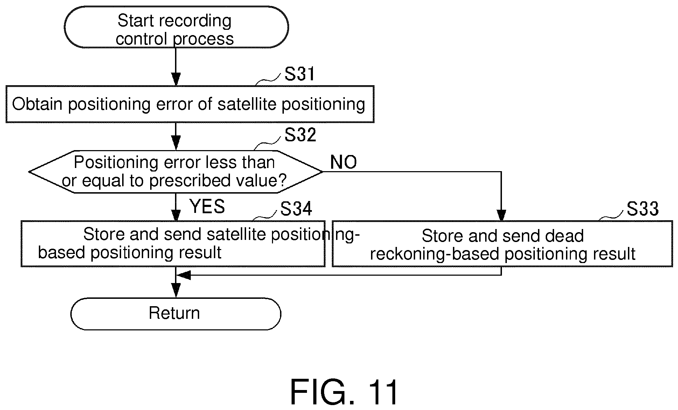

FIG. 11 is a flowchart for explaining the flow of the recording control process executed by the positional information obtaining device 1 illustrated in FIG. 3 that has the functional configuration illustrated in FIG. 5.

The recording control process begins when a recording control process start instruction is input via the input unit 118.

In step S31, the recording controlling process 155 obtains the positioning error in the satellite positioning obtained by the satellite positioning controlling process 152.

In step S32, the recording controlling process 155 determines whether the positioning error in the satellite positioning is less than or equal to the prescribed value E1.

If the positioning error in the satellite positioning is not less than or equal to the prescribed value E1, the determination in step S32 yields NO, and the process proceeds to step S33.

On the other hand, if the positioning error in the satellite positioning is less than or equal to the prescribed value E1, the determination in step S32 yields YES, and the process proceeds to step S34.

In step S33, the recording controlling process 155 selects the dead reckoning-based positioning result, stores this result in the movement history storage unit 173, and sends this result to the processing device 2.

In step S34, the recording controlling process 155 selects the satellite positioning-based positioning result, stores this result in the movement history storage unit 173, and sends this result to the processing device 2.

After step S33 and step S34, the recording control process is repeated until a recording control process stop instruction is input via the input unit 118.

### <Position Display Process>

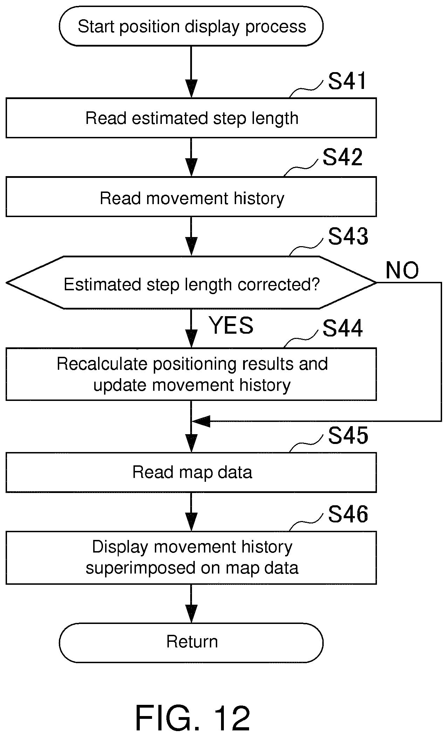

FIG. 12 is a flowchart for explaining the flow of the position display process executed by the processing device 2 illustrated in FIG. 4 that has the functional configuration illustrated in FIG. 7.

The position display process begins when a position display process start instruction is input via the input unit 217. Note that the position display process can be executed either to display the movement history of the measurement subject P stored in the movement history storage unit 272 at a later time or to display the movement history of the measurement subject P in a successively updated manner as the positional information obtaining device 1 calculates position.

In step S41, the display controlling process 253 reads the estimated step length stored in the movement history storage unit 272 in association with the movement history to be displayed.

In step S42, the display controlling process 253 reads the movement history to be displayed from the movement history storage unit 272.

In step S43, the movement history updating process 252 determines whether the step length information obtaining process 251 has obtained a corrected estimated step length for the estimated step length stored in the movement history storage unit 272 in association with the movement history to be displayed (that is, whether the estimated step length has been corrected).

If the step length information obtaining process 251 has not obtained a corrected estimated step length for the estimated step length stored in the movement history storage unit 272 in association with the movement history to be displayed, the determination in step S43 yields NO, and the process proceeds to step S45.

On the other hand, if the step length information obtaining process 251 has obtained a corrected estimated step length for the estimated step length stored in the movement history storage unit 272 in association with the movement history to be displayed, the determination in step S43 yields YES, and the process proceeds to step S44.

In step S44, the movement history updating process 252 uses the corrected estimated step length to recalculate the dead reckoning-based positioning results that has been calculated using the pre-correction estimated step length and then updates the movement history stored in the movement history storage unit 272 accordingly.

In step S45, the display controlling process 253 reads map data for the area surrounding the movement history to be displayed from the map data storage unit 271.

In step S46, the display controlling process 253 displays the movement history read from the movement history storage unit 272 or the movement history updated by the movement history updating process 252 in a superimposed manner onto the map data read from the map data storage unit 271.

After step S46, the position display process is repeated until a position display process stop instruction is input via the input unit 217.

### <Effects>

In the positional information recording system S as described above, the estimated step length used for dead reckoning is corrected by the step length correction process, thereby making it possible to improve positioning accuracy without having to use map information or know the route of travel in advance.

This, in turn, makes it possible to appropriately improve the dead reckoning-based positioning accuracy.

Moreover, in the step length correction process, the estimated step length used for dead reckoning is corrected on the basis of satellite positioning-based positioning results, thereby making it possible to improve dead reckoning-based positioning accuracy in comparison to when using standalone dead reckoning.

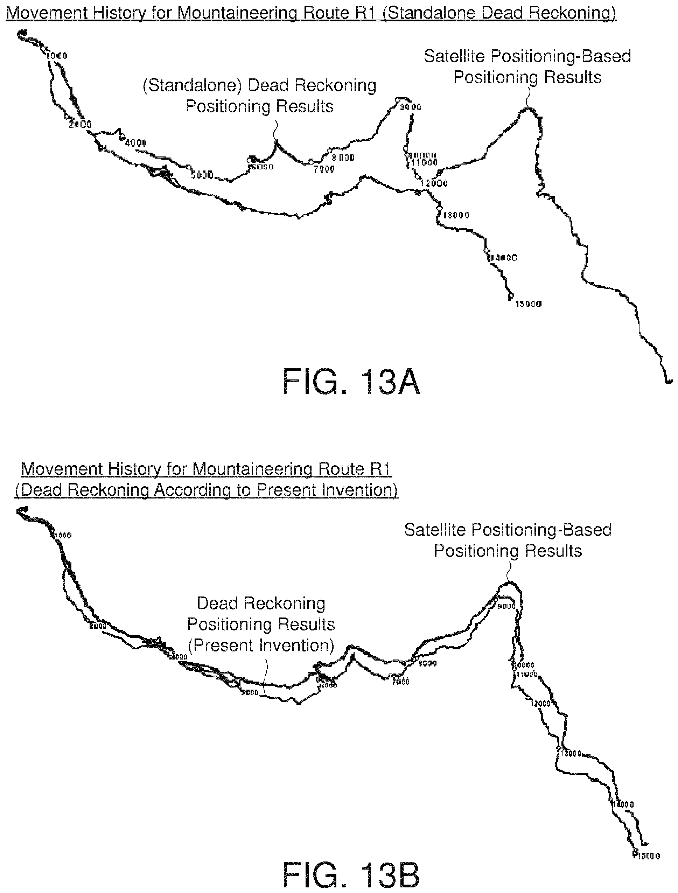

FIG. 13A is a schematic drawing illustrating positioning results obtained using standalone dead reckoning as the measurement subject P travels along a mountaineering route R1, and FIG. 13B is a schematic drawing illustrating positioning results obtained using the dead reckoning implementation according to the present invention as the measurement subject P travels along the mountaineering route R1.

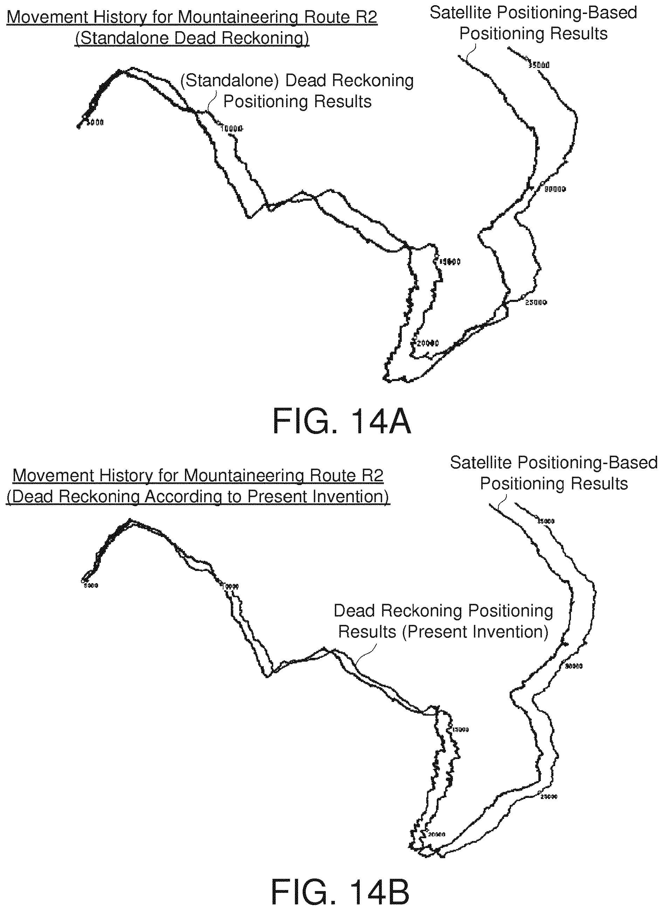

FIG. 14A is a schematic drawing illustrating positioning results obtained using standalone dead reckoning as the measurement subject P travels along a mountaineering route R2, and FIG. 14B is a schematic drawing illustrating positioning results obtained using the dead reckoning implementation according to the present invention as the measurement subject P travels along the mountaineering route R2.

Note that in FIGs. 13A and 13B and FIGs. 14A and 14B, movement histories obtained using continuous satellite positioning are also illustrated as examples of accurate positioning results.

As illustrated in FIGs. 13A and 13B and FIGs. 14A and 14B, for each of the mountaineering routes, the dead reckoning implementation according to the present invention makes it possible to obtain a more accurate movement history of the measurement subject P than when using the positioning results obtained with standalone dead reckoning.

Thus, when displaying movement histories superimposed onto map data, using a movement history based on positioning results obtained according to the present invention makes it possible to appropriately display the movement history of the measurement subject P relative to paths such as roads in the map data.

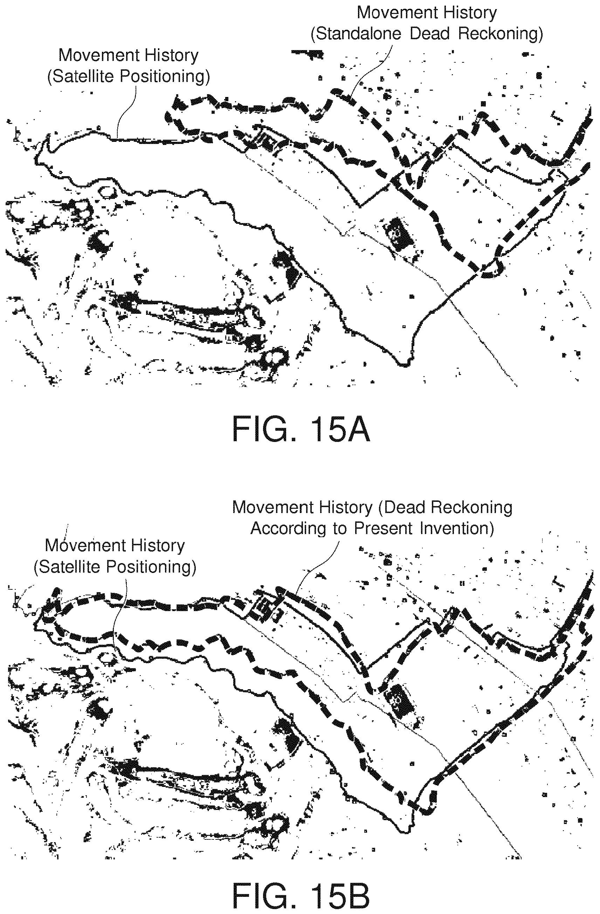

FIG. 15A is a schematic drawing illustrating an example of displaying positioning results obtained using standalone dead reckoning so as to be superimposed onto map data as a movement history, and FIG. 15B is a schematic drawing illustrating an example of displaying positioning results obtained using the dead reckoning implementation according to the present invention so as to be superimposed onto map data as a movement history.

Note that in FIGs. 15A and 15B, movement histories obtained using continuous satellite positioning are also illustrated as examples of accurate positioning results.

As illustrated in FIGs. 15A and 15B, when the positioning results obtained according to the present invention are displayed superimposed onto the map data as a movement history, the movement history of the measurement subject P matches paths such as roads in the map data more closely than when using standalone dead reckoning. This makes it possible to more appropriately display the movement history of the measurement subject P.

### <Modification Example 1>

In the embodiment described above, the recording controlling process 155 either selects the positioning results from the satellite positioning process when the positioning accuracy of the satellite positioning process is satisfactory (that is, when the positioning error is less than or equal to the prescribed value E1) or selects the positioning results from the dead reckoning process when the positioning accuracy of the satellite positioning process is not satisfactory (that is, when the positioning error is greater than the prescribed value E1), and then records the selected result as the current position of the measurement subject P.

In regards to this control condition, the recording controlling process 155 may measure the time or distance for which the positioning results from the dead reckoning process have been selected and may then, if the time or distance for which the positioning results from the dead reckoning process have been selected exceeds a prescribed time or prescribed distance (a constant or variable threshold value), modify the selection condition so as to make the positioning results from the satellite positioning process more likely to be selected.

In other words, the prescribed value E1 for evaluating the positioning error in the satellite positioning can be increased so that even when the positioning error is relatively large, the positioning accuracy of the satellite positioning process is still determined to be satisfactory, thereby making the positioning results from the satellite positioning process more likely to be selected.

This makes it possible to inhibit reductions in positioning accuracy caused by excessive accumulation of error during dead reckoning.

### <Modification Example 2>

In the embodiment described above, the step length correction process 154 sets two sites obtained using satellite positioning as comparison sites and then compares the positioning results obtained using dead reckoning between the two sites to the satellite positioning-based positioning results in order to correct the estimated step length of the measurement subject P.

Alternatively, three or more sites obtained using satellite positioning may be set as comparison sites, and then positioning results obtained using dead reckoning between the three or more sites may be compared to the satellite positioning-based positioning results in order to correct the estimated step length of the measurement subject P.

As one example, when the positions of sites A, B, and C are calculated in chronological order using satellite positioning and these three sites are set as the comparison sites, the step length correction process can be executed for sites A and B, and then the step length correction process can be executed for sites B and C. Then, the corrected estimated step length values obtained from the respective iterations of the step length correction process can be averaged to calculate a corrected estimated step length to be used for dead reckoning between sites A to C.

This makes it possible to correct estimated step length in a way that averages out factors such as changes in terrain that cause the step length of the measurement subject P to change.

The positional information obtaining device 1 configured as described above includes the step length correction process 154.

The step length correction process 154, without using map information, obtains a first distance on the basis of positional information for a first site obtained using radio waves from navigation satellites and positional information for a second site obtained using radio waves from navigation satellites.

The step length correction process 154, by using dead reckoning based on a step count and a step length of a user, and without using map information, obtains a second distance between a position corresponding to a time at which the positional information for the first site was obtained using radio waves from navigation satellites and a position corresponding to a time at which the positional information for the second site was obtained using radio waves from navigation satellites.

The step length correction process 154 corrects the step length of the user to be used for dead reckoning on the basis of the obtained first distance and second distance.

This makes it possible to improve positioning accuracy without having to use map information or know the route of travel in advance.

This, in turn, makes it possible to appropriately improve dead reckoning-based positioning accuracy.

The step length correction process 154 obtains the second distance on the basis of the positional information for the first site obtained using radio waves from navigation satellites and positional information obtained using dead reckoning based on the step count and the step length of the user as of the time at which the positional information for the second site was obtained using radio waves from navigation satellites.

This makes it possible to improve positioning accuracy without having to use map information or know the route of travel in advance.

Moreover, the positional information obtaining device 1 includes the satellite positioning controlling process 152.

The satellite positioning controlling process 152 obtains positional information using radio waves from navigation satellites.

The step length correction process 154 obtains the first distance on the basis of positional information obtained for the first site and positional information obtained for the second site. Moreover, the step length correction process 154 obtains the second distance on the basis of the obtained positional information for the first site and positional information obtained using dead reckoning based on the step count and the step length of the user as of a time at which the positional information for the second site was obtained.

This makes it possible to correct the step length to be used for dead reckoning-based positioning on the basis of satellite positioning-based positioning results.

This, in turn, makes it possible to increase dead reckoning-based positioning accuracy in comparison to when using standalone dead reckoning.

The step length correction process 154 obtains error in positional information obtained by the satellite positioning controlling process 152.

The step length correction process 154 obtains the first distance on the basis of positional information for the first site for which the obtained error is less than or equal to a prescribed value and positional information for the second site for which the obtained error is less than or equal to the prescribed value. Moreover, the step length correction process 154 obtains the second distance on the basis of the positional information for the first site for which the obtained error is less than or equal to the prescribed value and positional information obtained using dead reckoning based on the step count and the step length of the user as of a time at which the positional information for the second site for which the obtained error is less than or equal to the prescribed value was obtained.

This makes it possible to correct the user step length to be used in dead reckoning on the basis of positioning results for positioning sites which yield high satellite positioning accuracy.

Furthermore, the positional information obtaining device 1 includes the dead reckoning controlling process 153.

The dead reckoning controlling process 153 obtains positional information using dead reckoning based on the step count and step length of the user.

The dead reckoning controlling process 153 obtains this positional information using the step count of the user and the step length of the user that has been corrected by the step length correction process 154.

This makes it possible to increase dead reckoning-based positioning accuracy.

In addition, the positional information obtaining device 1 includes the recording controlling process 155.

The recording controlling process 155 outputs either positional information obtained by the satellite positioning controlling process 152 or positional information obtained by the dead reckoning controlling process 153.

The recording controlling process 155 controls the output state (that is, selects which positional information to output).

When the error obtained by the step length correction process 154 is less than or equal to the prescribed value, the recording controlling process 155 controls the output state so as to output positional information obtained by the satellite positioning controlling process 152, and when the error obtained by the step length correction process 154 is greater than the prescribed value, the recording controlling process 155 controls the output state so as to output positional information obtained by the dead reckoning controlling process 153.

This makes it possible to output satellite positioning-based positioning results for positioning sites which yield high satellite positioning accuracy and to output positional information obtained using dead reckoning for other positioning sites.

The step length correction process 154 changes the prescribed value to be greater when a time or distance for which the recording controlling process 155 has controlled the output state so as to output positional information obtained by the dead reckoning controlling process 153 exceeds a prescribed time or a prescribed distance.

This makes it possible to implement control in a way that makes satellite positioning more likely to be performed once satellite positioning has not been performed for the prescribed time or the prescribed distance.

Moreover, the positional information obtaining device 1 includes the movement history storage unit 173.

The movement history storage unit 173 stores either positional information obtained by the satellite positioning controlling process 152 or positional information obtained by the dead reckoning controlling process 153.

The recording controlling process 155 outputs either positional information obtained by the satellite positioning controlling process 152 or positional information obtained by the dead reckoning controlling process 153 to the movement history storage unit 173.

This makes it possible to store the obtained positional information on the positional information obtaining device 1 as a movement history of the positional information obtaining device 1.

Furthermore, the positional information obtaining device 1 includes the communication unit 121.

The communication unit 121 sends either positional information obtained by the satellite positioning controlling process 152 or positional information obtained by the dead reckoning controlling process 153 to an external device.

The recording controlling process 155 outputs either positional information obtained by the satellite positioning controlling process 152 or positional information obtained by the dead reckoning controlling process 153 to the communication unit 121.

This makes it possible to send the obtained positional information from the positional information obtaining device 1 to an external device (such as the processing device 2) as a movement history of the positional information obtaining device 1.

The step length correction process 154 determines whether the user is walking, and, if it is determined that the user is walking, obtains the second distance.

This makes it possible to select a state which is appropriate for correcting the user step length used in dead reckoning and then correct the user step length accordingly.

The present invention is not limited to the embodiment described above, and various modifications, improvements, or the like within the scope of making it possible to achieve the objectives of the present invention are included in the present invention.

In the embodiment as described above, satellite positioning is always performed, and when the positioning error of satellite positioning becomes greater than the prescribed value E1, the dead reckoning-based positioning results are selected for use as movement history instead of the satellite positioning-based positioning results.

Alternatively, satellite positioning may be performed intermittently (every 10 minutes, for example), and then the dead reckoning-based positioning results may be used as movement history during the periods in which satellite positioning is not performed.

In this case, two sites for which the positioning error of satellite positioning is less than or equal to the prescribed value E1 are still set as comparison sites, and the positioning results obtained using dead reckoning between these two sites are compared to the satellite positioning-based positioning results to correct the estimated step length of the measurement subject P.

Moreover, in the embodiment as described above, when correcting the estimated step length, the ratio of the linear distance D2 between the first site and the second site as obtained using satellite positioning to the linear distance D1 between the first site and the second site as obtained using dead reckoning is multiplied with the step length used for dead reckoning, thereby correcting the estimated step length. However, the present invention is not limited to this approach. For example, when correcting the estimated step length, the ratio of the distance along a curve approximating the path between the first site and the second site as obtained using satellite positioning to the distance along a curve approximating the path between the first site and the second site as obtained using dead reckoning may be multiplied with the step length used for dead reckoning in order to correct the estimated step length.

Furthermore, in the embodiment as described above, when obtaining the linear distance D1 between the first site and the second site as obtained using dead reckoning, the positional information used for the first site is the same positional information obtained for the first site using satellite positioning. However, the same positional information does not necessarily need to be used for the first site.

In addition, the distance D 1 between the first site and the second site as obtained using dead reckoning does not necessarily need to be obtained on the basis of positional information and may instead be obtained on the basis of the step count and step length.

Moreover, in the embodiment described above, the step length correction process 154 may determine whether the movement behavior of the measurement subject P is suitable for execution of the step length correction process and then only execute the step length correction process when the movement behavior of the measurement subject P is suitable for execution of the step length correction process (such as when walking). For example, execution of the step length correction process may be disabled at times other than when the measurement subject P is walking normally, such as when the measurement subject P is running or traveling by bicycle, automobile, train, or the like.

Furthermore, although in the embodiment described above the positional information recording system S is constituted by the positional information obtaining device 1 and the processing device 2 (that is, two devices), the present invention is not limited to this configuration. For example, the positional information recording system S may be constituted by a single device in which the positional information obtaining device 1 and the processing device 2 are integrated together, such as by a smartphone having the features of both the positional information obtaining device 1 and the processing device 2.

In addition, although in the embodiment above the positional information obtaining device 1 to which the present invention is applied was described as being a sensor device as an example, the present invention is not particularly limited to this configuration.

For example, the present invention can be applied to general electronic devices having positioning process features. More specifically, the present invention can be applied to notebook personal computers, printers, television sets, video cameras, digital cameras, portable navigation devices, mobile phones, smartphones, portable game systems, and the like, for example.

The sequences of processes described above can be implemented with hardware or can be implemented with software.

In other words, the functional configuration illustrated in FIGs. 5 and 7 are only examples and are not particularly limited. The positional information obtaining device 1 can have any features as long as those features make it possible to perform the sequences of processes described above as a whole, and the types of functional blocks used to implement these features are not particularly limited to the examples illustrated in FIGs. 5 and 7.

Moreover, each functional block may be configured using hardware alone, may be configured using software alone, or may be configured using a combination of both.

The functional configuration of the present embodiment is implemented with a processor that executes processes. Examples of processors that can be used in the present embodiment include processors configured using various types of processing devices such as single processors, multiprocessors, and multi-core processors, as well as configurations in which these various types of processing devices are integrated together with processing circuits such as application-specific integrated circuits (ASICs) or field-programmable gate arrays (FPGAs).

When the sequences of processes are implemented using software, the programs constituting that software are installed on a computer or the like from a network or storage media.

The computer may be a computer embedded in dedicated hardware. Moreover, the computer may be a computer that can perform various types of processes by installing various types of programs, such as a general-purpose personal computer.

The storage media storing these programs includes not only removable media distributed separately from the main device to provide the programs to users but also storage media provided to users already embedded in the main device in advance, or the like. The removable media is a magnetic disk (including a floppy disk), an optical disc, or a magneto-optical disc, for example. The optical disc is a Compact Disc Read-Only Memory (CD-ROM), a Digital Versatile Disc (DVD), a Blu-ray Disc (registered trademark), or the like. The magneto-optical disc is a MiniDisc (MD) or the like. Moreover, the storage media that is provided to users already embedded in the main device in advance includes the ROM 112 illustrated in FIG. 3 that stores programs, the semiconductor memory included in the storage unit 120 illustrated in FIG. 3, or the like, for example.

Furthermore, in the present specification, steps coded in the programs stored on the storage media include not only processes performed in chronological order in accordance with the order of those steps, but also processes that may not necessarily be performed in chronological order but are performed separately or in parallel.

In addition, in the present specification, the term "system" means an overall device constituted by a plurality of devices or a plurality of units or the like.

Although several embodiments of the present invention were described above, these embodiments are only examples and do not limit the technical scope of the present invention, as defined in the claims.

## Claims

1. An electronic device (1), comprising:
an output unit (119); a processor (111); and
a first storage unit (112, 113, 120) that stores programs to be executed by the processor (111),
wherein the processor (111) reads out the programs stored on the first storage unit (112, 113, 120) so as to perform the following when a user (P) moves:
acquiring positional information of a first location of the user (P) that is determined using radio waves from navigation satellites;
acquiring positional information of a second location to which the user (P) travelled from the first location, the positional information of the second location being determined using radio waves from navigation satellites;
performing a first distance obtaining process of obtaining, without using map information, a first distance (D1) between the first location and the second location based on the acquired positional information of the first location and the acquired positional information of the second location;
performing a second distance obtaining process (S11-S15) of obtaining, without using map information, a second distance (D2) between the first location and the second location, by using dead reckoning based on a step count and a step length (X1) of the user (P) as the user (P) travelled from the first location to the second location; and
performing a step length correction process (S21-S27) of correcting the step length (X1) of the user (P) that is used in the dead reckoning on the basis of the first distance (D1) obtained by the first distance obtaining process and the second distance (D2) obtained by the second distance obtaining process (S11-S15),
**characterized in that**
the processor (111) executes an error obtaining process (S31) of obtaining an
error in the current positional information calculated by the satellite-based positional information calculation process, and only when the error obtained by the error obtaining process (S31) is less than or equal to a prescribed threshold value, the processor (111) uses the positional information calculated by the satellite-based positional information calculation process as valid in acquiring the positional information of the first and second locations, and
the processor (111) performs the following:
when the error obtained by the error obtaining process (S31) is less than or equal to the prescribed threshold value, controlling (S34) the output unit (119) so as to output the current positional information of the user (P) calculated by the satellite-based positional information calculation process, and
when the error obtained by the error obtaining process (S31) is greater than the prescribed value, controlling (S33) the output unit (119) so as to output current positional information of the user (P) that is calculated using the dead reckoning,
wherein the processor (111) executes a changing process of increasing the prescribed threshold value to a greater threshold value when the output unit (119) has been controlled by the processor (111) to output the current positional information of the user (P) calculated using the dead reckoning continuously for more than a prescribed time or a prescribed distance.

2. The electronic device according to claim 1, wherein in the second distance obtaining process (S11 -S15), the processor (111) uses the acquired positional information of the first location determined using the radio waves from the navigation satellites as a starting location of the dead reckoning towards the second location, and calculates positional information of the second location using the dead reckoning based on the step count and the step length (X1) of the user (P).

3. The electronic device according to claim 2, wherein, after the step length correction process (S21-S27) is performed to correct the step length (X2), the processor (111) uses the corrected step length (X2) in calculating a position of the user (P) by dead reckoning.

4. The electronic device according to claim 3, further comprising:
a second storage unit (171, 172, 173), that is a separate storage unit from the first storage unit (112, 113), or a portion of the first storage unit (120),
wherein the processor (111) performs the following:
when the error obtained by the error obtaining process (S31) is less than or equal to the prescribed threshold value, causing (S34) the current positional information of the user (P) calculated by the satellite-based positional information calculation process to be stored in the second storage unit (171), and
when the error obtained by the error obtaining process (S31) is greater than the prescribed value, causing (S33) current positional information of the user (P) that is calculated using the dead reckoning to be stored in the second storage unit (172).

5. The electronic device according to claims 1 to 4, further comprising:
a transmitter unit (121),
wherein the processor (111) performs the following:
when the error obtained by the error obtaining process (S31) is less than or equal to the prescribed threshold value, causing (S34) the current positional information of the user (P) calculated by the satellite-based positional information calculation process to be transmitted by the transmitter unit (121), and
when the error obtained by the error obtaining process (S31) is greater than the prescribed value, causing (S33) current positional information of the user (P) that is calculated using the dead reckoning to be transmitted by the transmitter unit (121).

6. The electronic device according to any one of claims 1 to 5, wherein the processor (111) determines whether the user (P) has been walking from the first location to the second location, and only when the processor (111) determines that the user (P) has been walking, the processor (111) executes the second distance obtaining process (S11-S15) by the dead reckoning.

7. A method of correcting an error in dead reckoning performed by a processor (111) in an electronic device, wherein the electronic device comprises an output unit (119), the method comprising:
acquiring (S1-S3) positional information of a first location of a user (P) that is determined using radio waves from navigation satellites;
acquiring positional information of a second location to which the user (P) travelled from the first location, the positional information of the second location being determined using radio waves from navigation satellites;
performing a first distance obtaining process of obtaining, without using map information, a first distance (D1) between the first location and the second location based on the acquired positional information of the first location and the acquired positional information of the second location;
performing a second distance obtaining process (S11-S15) of obtaining, without using map information, a second distance (D2) between the first location and the second location, by using dead reckoning based on a step count and a step length (X1) of the user (P) as the user (P) travelled from the first location to the second location; and
performing a step length correction process (S21-S27) of correcting the step length (X1) of the user (P) that is used in the dead reckoning on the basis of the first distance (D1) obtained by the first distance obtaining process and the second distance (D2) obtained by the second distance obtaining process (S11-S15),
**characterized in that** the method further comprises:
performing an error obtaining process of obtaining an error in the current positional information calculated by the satellite-based positional information calculation process,
wherein only when the error obtained by the error obtaining process is less than or equal to a prescribed threshold value, the positional information calculated by the satellite-based positional information calculation process is used as valid in acquiring the positional information of the first and second locations, and
when the error obtained by the error obtaining process (S31) is less than or equal to the prescribed threshold value, controlling (S34) the output unit (119) so as to output the current positional information of the user (P) calculated by the satellite-based positional information calculation process, and
when the error obtained by the error obtaining process (S31) is greater than the prescribed value, controlling (S33) the output unit (119) so as to output current positional information of the user (P) that is calculated using the dead reckoning,
wherein the method further comprises:
increasing the prescribed threshold value to a greater threshold value when the output unit (119) has been controlled to output the current positional information of the user (P) calculated using the dead reckoning continuously for more than a prescribed time or a prescribed distance.

8. The method of correcting an error according to claim 7, wherein in the second distance obtaining process (S11-S15), the acquired positional information of the first location determined using the radio waves from the navigation satellites is used as a starting location of the dead reckoning towards the second location, and positional information of the second location is calculated using the dead reckoning based on the step count and the step length (X1) of the user (P).

9. The method of correcting an error according to claim 8, further comprising:
after performing the step length correction process (S21-S27), calculating a position of the user (P) by dead reckoning using the corrected step length (X2).

10. The method of correcting an error according to claim 9, wherein the electronic device includes a storage unit, and the method further comprises:
when the error obtained by the error obtaining process (S31) is less than or equal to the prescribed threshold value, causing (S34) the current positional information of the user (P) calculated by the satellite-based positional information calculation process to be stored in the storage unit (171), and
when the error obtained by the error obtaining process (S31) is greater than the prescribed value, causing (S33) current positional information of the user (P) that is calculated using the dead reckoning to be stored in the storage unit (172).

11. The method of correcting an error according to claims 7 to 10, wherein the electronic device includes a transmitter unit (121), and the method further comprises:
when the error obtained by the error obtaining process (S31) is less than or equal to the prescribed threshold value, causing (S34) the current positional information of the user (P) calculated by the satellite-based positional information calculation process to be transmitted by the transmitter unit (121), and
when the error obtained by the error obtaining process (S31) is greater than the prescribed value, causing (S33) current positional information of the user (P) that is calculated using the dead reckoning to be transmitted by the transmitter unit (121).

12. A computer-readable non-transitory storage medium having stored thereon a program to be executable by a processor (111) of an electronic device, wherein the electronic device comprises an output unit (119), the program causing the processor (111) to perform the following:
acquiring (S1-S3) positional information of a first location of a user (P) that is determined using radio waves from navigation satellites;
acquiring positional information of a second location to which the user (P) travelled from the first location, the positional information of the second location being determined using radio waves from navigation satellites;
performing a first distance obtaining process of obtaining, without using map information, a first distance (D1) between the first location and the second location based on the acquired positional information of the first location and the acquired positional information of the second location;
performing a second distance obtaining process (S11 -S15) of obtaining, without using map information, a second distance (D2) between the first location and the second location, by using dead reckoning based on a step count and a step length (X1) of the user (P) as the user (P) travelled from the first location to the second location; and
performing a step length correction process (S21-S27) of correcting the step length (X1) of the user (P) that is used in the dead reckoning on the basis of the first distance (D1) obtained by the first distance obtaining process and the second distance (D2) obtained by the second distance obtaining process (S11-S15),
**characterized in that**
the program further causes the processor (111) to perform an error obtaining process of obtaining an error in the current positional information calculated by the satellite-based positional information calculation process,
wherein only when the error obtained by the error obtaining process is less than or equal to a prescribed threshold value, the positional information calculated by the satellite-based positional information calculation process is used as valid in acquiring the positional information of the first and second locations, and
when the error obtained by the error obtaining process (S31) is less than or equal to the prescribed threshold value, controlling (S34) the output unit (119) so as to output the current positional information of the user (P) calculated by the satellite-based positional information calculation process, and
when the error obtained by the error obtaining process (S31) is greater than the prescribed value, controlling (S33) the output unit (119) so as to output current positional information of the user (P) that is calculated using the dead reckoning,
wherein the program further causes the processor (111) to increase the prescribed threshold value to a greater threshold value when the output unit (119) has been controlled to output the current positional information of the user (P) calculated using the dead reckoning continuously for more than a prescribed time or a prescribed distance.

## Patentansprüche

1. Elektronische Vorrichtung (1), umfassend:
eine Ausgabeeinheit (119);
einen Prozessor (111); und
eine erste Speichereinheit (112, 113, 120), die Programme speichert, die durch den Prozessor (111) auszuführen sind,
wobei der Prozessor (111) die auf der ersten Speichereinheit (112, 113, 120) gespeicherten Programme ausliest, um so Folgendes durchzuführen, wenn sich ein Benutzer (P) bewegt:
Erlangen von Positionsinformationen eines ersten Standorts des Benutzers (P), die unter Verwendung von Funkwellen von Navigationssatelliten bestimmt werden;
Erlangen von Positionsinformationen eines zweiten Standorts, zu dem sich der Benutzer (P) von dem ersten Standort bewegt hat, wobei die Positionsinformationen des zweiten Standorts unter Verwendung von Funkwellen von Navigationssatelliten bestimmt werden;
Durchführen eines ersten Entfernungserfassungsprozesses zum Erfassen einer ersten Entfernung (D1) zwischen dem ersten Standort und dem zweiten Standort auf Grundlage der erlangten Positionsinformationen des ersten Standorts und der erlangten Positionsinformationen des zweiten Standorts, ohne dabei Karteninformationen zu verwenden;
Durchführen eines zweiten Entfernungserfassungsprozesses (S11-S15) zum Erfassen einer zweiten Entfernung (D2) zwischen dem ersten Standort und dem zweiten Standort unter Verwendung von Koppelnavigation auf Grundlage einer Schrittanzahl und einer Schrittlänge (X1) des Benutzers (P), wenn sich der Benutzer (P) von dem ersten Standort zu dem zweiten Standort bewegt, ohne dabei Karteninformationen zu verwenden; und
Durchführen eines Schrittlängenkorrekturprozesses (S21-S27) zum Korrigieren der Schrittlänge (X1) des Benutzers (P), die bei der Koppelnavigation verwendet wird, auf der Grundlage der ersten Entfernung (D1), die durch den ersten Entfernungserfassungsprozess erfasst wird, und der zweiten Entfernung (D2), die durch den zweiten Entfernungserfassungsprozess (S11-S15) erfasst wird,
**dadurch gekennzeichnet, dass**
der Prozessor (111) einen Fehlererfassungsprozess (S31) zum Erfassen eines Fehlers in den aktuellen Positionsinformationen, die durch den satellitenbasierten Positionsinformationsberechnungsprozess berechnet werden, ausführt und nur dann, wenn der durch den Fehlererfassungsprozess (S31) erfasste Fehler kleiner als oder gleich einem vorgegebenen Schwellenwert ist, der Prozessor (111) die durch den satellitenbasierten Positionsinformationsberechnungsprozess berechneten Positionsinformationen als gültig beim Erlangen der Positionsinformationen des ersten und des zweiten Standorts verwendet, und der Prozessor (111) Folgendes durchführt:
wenn der durch den Fehlererfassungsprozess (S31) erfasste Fehler kleiner als oder gleich einem vorgegebenen Schwellenwert ist, Steuern (S34) der Ausgabeeinheit (119), um so die aktuellen Positionsinformationen des Benutzers (P), die durch den satellitenbasierten Positionsinformationsberechnungsprozess berechnet werden, auszugeben, und
wenn der durch den Fehlererfassungsprozess (S31) erfasste Fehler größer als ein vorgegebener Schwellenwert ist, Steuern (S33) der Ausgabeeinheit (119), um so aktuelle Positionsinformationen des Benutzers (P) auszugeben, die unter Verwendung der Koppelnavigation berechnet werden,
wobei der Prozessor (111) einen Änderungsprozess zum Erhöhen des vorgegebenen Schwellenwerts auf einen größeren Schwellenwert ausführt, wenn die Ausgabeeinheit (119) durch den Prozessor (111) dazu gesteuert wurde, die aktuellen Positionsinformationen des Benutzers (P), die unter Verwendung der Koppelnavigation berechnet wurden, dauerhaft für mehr als einen vorgegebenen Zeitraum oder eine vorgegebene Entfernung auszugeben.

2. Elektronische Vorrichtung nach Anspruch 1, wobei der Prozessor (111) in dem zweiten Entfernungserfassungsprozess (S11-S15) die erlangten Positionsinformationen des ersten Standorts, die unter Verwendung der Funkwellen von den Navigationssatelliten bestimmt werden, als einen Ausgangsstandort der Koppelnavigation in Richtung des zweiten Standorts verwendet und Positionsinformationen des zweiten Standorts unter Verwendung der Koppelnavigation auf Grundlage der Schrittanzahl und der Schrittlänge (X1) des Benutzers (P) berechnet.

3. Elektronische Vorrichtung nach Anspruch 2, wobei, nachdem der Schrittlängenkorrekturprozess (S21-S27) durchgeführt wurde, um die Schrittlänge (X2) zu korrigieren, der Prozessor (111) die korrigierte Schrittlänge (X2) beim Berechnen einer Position des Benutzers (P) mittels Koppelnavigation verwendet.

4. Elektronische Vorrichtung nach Anspruch 3, ferner umfassend:
eine zweite Speichereinheit (171, 172, 173), die eine von der ersten Speichereinheit (112, 113) getrennte Speichereinheit ist, oder einen Teil der ersten Speichereinheit (120),
wobei der Prozessor (111) Folgendes durchführt:
wenn der durch den Fehlererfassungsprozess (S31) erfasste Fehler kleiner als oder gleich dem vorgegebenen Schwellenwert ist, Veranlassen (S34), dass die aktuellen Positionsinformationen des Benutzers (P), die durch den satellitenbasierten Positionsinformationsberechnungsprozess berechnet werden, in der zweiten Speichereinheit (171) gespeichert werden, und
wenn der durch den Fehlererfassungsprozess (S31) erfasste Fehler größer als der vorgegebene Wert ist, Veranlassen (S33), dass aktuelle Positionsinformationen des Benutzers (P), die unter Verwendung der Koppelnavigation berechnet werden, in der zweiten Speichereinheit (172) gespeichert werden.

5. Elektronische Vorrichtung nach Anspruch 1 bis 4, ferner umfassend:
eine Sendereinheit (121),
wobei der Prozessor (111) Folgendes durchführt:
wenn der durch den Fehlererfassungsprozess (S31) erfasste Fehler kleiner als oder gleich dem vorgegebenen Schwellenwert ist, Veranlassen (S34), dass die aktuellen Positionsinformationen des Benutzers (P), die durch den satellitenbasierten Positionsinformationsberechnungsprozess berechnet werden, durch die Sendereinheit (121) übertragen werden, und
wenn der durch den Fehlererfassungsprozess (S31) erfasste Fehler größer als der vorgegebene Wert ist, Veranlassen (S33), dass aktuelle Positionsinformationen des Benutzers (P), die unter Verwendung der Koppelnavigation berechnet werden, durch die Sendereinheit (121) übertragen werden.

6. Elektronische Vorrichtung nach einem der Ansprüche 1 bis 5, wobei der Prozessor (111) bestimmt, ob der Benutzer (P) von dem ersten Standort zu dem zweiten Standort gelaufen ist, und der Prozessor (111) nur dann, wenn der Prozessor (111) bestimmt, dass der Benutzer (P) gelaufen ist, den zweiten Entfernungserfassungsprozess (S11-S15) mittels der Koppelnavigation ausführt.

7. Verfahren zum Korrigieren eines Fehlers in Koppelnavigation, durchgeführt durch einen Prozessor (111) in einer elektronischen Vorrichtung, wobei die elektronische Vorrichtung eine Ausgabeeinheit (119) umfasst, das Verfahren umfassend:
Erlangen (S1-S3) von Positionsinformationen eines ersten Standorts eines Benutzers (P), die unter Verwendung von Funkwellen von Navigationssatelliten bestimmt werden;
Erlangen von Positionsinformationen eines zweiten Standorts, zu dem sich der Benutzer (P) von dem ersten Standort bewegt hat, wobei die Positionsinformationen des zweiten Standorts unter Verwendung von Funkwellen von Navigationssatelliten bestimmt werden;
Durchführen eines ersten Entfernungserfassungsprozesses zum Erfassen einer ersten Entfernung (D1) zwischen dem ersten Standort und dem zweiten Standort auf Grundlage der erlangten Positionsinformationen des ersten Standorts und der erlangten Positionsinformationen des zweiten Standorts, ohne dabei Karteninformationen zu verwenden;
Durchführen eines zweiten Entfernungserfassungsprozesses (S11-S15) zum Erfassen einer zweiten Entfernung (D2) zwischen dem ersten Standort und dem zweiten Standort unter Verwendung von Koppelnavigation auf Grundlage einer Schrittanzahl und einer Schrittlänge (X1) des Benutzers (P), wenn sich der Benutzer (P) von dem ersten Standort zu dem zweiten Standort bewegt, ohne dabei Karteninformationen zu verwenden; und
Durchführen eines Schrittlängenkorrekturprozesses (S21-S27) zum Korrigieren der Schrittlänge (X1) des Benutzers (P), die bei der Koppelnavigation verwendet wird, auf der Grundlage der ersten Entfernung (D1), die durch den ersten Entfernungserfassungsprozess erfasst wird, und der zweiten Entfernung (D2), die durch den zweiten Entfernungserfassungsprozess (S11-S15) erfasst wird,
**dadurch gekennzeichnet, dass** das Verfahren ferner Folgendes umfasst:
Durchführen eines Fehlererfassungsprozesses zum Erfassen eines Fehlers in den aktuellen Positionsinformationen, die durch den satellitenbasierten Positionsinformationsberechnungsprozess berechnet werden,
wobei nur dann, wenn der durch den Fehlererfassungsprozess erfasste Fehler kleiner als oder gleich einem vorgegebenen Schwellenwert ist, die durch den satellitenbasierten Positionsinformationsberechnungsprozess berechneten Positionsinformationen als gültig beim Erlangen der Positionsinformationen des ersten und des zweiten Standorts verwendet werden, und
wenn der durch den Fehlererfassungsprozess (S31) erfasste Fehler kleiner als oder gleich einem vorgegebenen Schwellenwert ist, Steuern (S34) der Ausgabeeinheit (119), um so die aktuellen Positionsinformationen des Benutzers (P), die durch den satellitenbasierten Positionsinformationsberechnungsprozess berechnet werden, auszugeben, und
wenn der durch den Fehlererfassungsprozess (S31) erfasste Fehler größer als der vorgegebene Wert ist, Steuern (S33), der Ausgabeeinheit (119), um so aktuelle Positionsinformationen des Benutzers (P), die unter Verwendung der Koppelnavigation berechnet werden, auszugeben, wobei das Verfahren ferner Folgendes umfasst:
Erhöhen des vorgegebenen Schwellenwerts auf einen größeren Schwellenwert, wenn die Ausgabeeinheit (119) dazu gesteuert wurde, die aktuellen Positionsinformationen des Benutzers (P), die unter Verwendung der Koppelnavigation berechnet wurden, dauerhaft für mehr als einen vorgegebenen Zeitraum oder eine vorgegebene Entfernung auszugeben.

8. Verfahren zum Korrigieren eines Fehlers nach Anspruch 7, wobei in dem zweiten Entfernungserfassungsprozess (S11-S15) die erlangten Positionsinformationen des ersten Standorts, die unter Verwendung der Funkwellen von den Navigationssatelliten bestimmt werden, als ein Ausgangsstandort der Koppelnavigation in Richtung des zweiten Standorts verwendet werden und Positionsinformationen des zweiten Standorts unter Verwendung der Koppelnavigation auf Grundlage der Schrittanzahl und der Schrittlänge (X1) des Benutzers (P) berechnet werden.

9. Verfahren zum Korrigieren eines Fehlers nach Anspruch 8, ferner umfassend:
nach dem Durchführen des Schrittlängenkorrekturprozesses (S21-S27), Berechnen einer Position des Benutzers (P) mittels Koppelnavigation unter Verwendung der korrigierten Schrittlänge (X2).

10. Verfahren zum Korrigieren eines Fehlers nach Anspruch 9,
wobei die elektronische Vorrichtung eine Speichereinheit beinhaltet und das Verfahren ferner Folgendes umfasst:
wenn der durch den Fehlererfassungsprozess (S31) erfasste Fehler kleiner als oder gleich dem vorgegebenen Schwellenwert ist, Veranlassen (S34), dass die aktuellen Positionsinformationen des Benutzers (P), die durch den satellitenbasierten Positionsinformationsberechnungsprozess berechnet werden, in der Speichereinheit (171) gespeichert werden, und
wenn der durch den Fehlererfassungsprozess (S31) erfasste Fehler größer als der vorgegebene Wert ist, Veranlassen (S33), dass aktuelle Positionsinformationen des Benutzers (P), die unter Verwendung der Koppelnavigation berechnet werden, in der Speichereinheit (172) gespeichert werden.

11. Verfahren zum Korrigieren eines Fehlers nach Anspruch 7 bis 10,
wobei die elektronische Vorrichtung eine Sendereinheit (121) beinhaltet und das Verfahren ferner Folgendes umfasst:
wenn der durch den Fehlererfassungsprozess (S31) erfasste Fehler kleiner als oder gleich dem vorgegebenen Schwellenwert ist, Veranlassen (S34), dass die aktuellen Positionsinformationen des Benutzers (P), die durch den satellitenbasierten Positionsinformationsberechnungsprozess berechnet werden, durch die Sendereinheit (121) übertragen werden, und
wenn der durch den Fehlererfassungsprozess (S31) erfasste Fehler größer als der vorgegebene Wert ist, Veranlassen (S33), dass aktuelle Positionsinformationen des Benutzers (P), die unter Verwendung der Koppelnavigation berechnet werden, durch die Sendereinheit (121) übertragen werden.

12. Computerlesbares, nicht-transitorisches Speichermedium, auf dem ein Programm gespeichert ist, das durch einen Prozessor (111) einer elektronischen Vorrichtung ausführbar ist, wobei die elektronische Vorrichtung eine Ausgabeeinheit (119) umfasst, wobei das Programm den Prozessor (111) dazu veranlasst, Folgendes durchzuführen:
Erlangen (S1-S3) von Positionsinformationen eines ersten Standorts eines Benutzers (P), die unter Verwendung von Funkwellen von Navigationssatelliten bestimmt werden;
Erlangen von Positionsinformationen eines zweiten Standorts, zu dem sich der Benutzer (P) von dem ersten Standort bewegt hat, wobei die Positionsinformationen des zweiten Standorts unter Verwendung von Funkwellen von Navigationssatelliten bestimmt werden;
Durchführen eines ersten Entfernungserfassungsprozesses zum Erfassen einer ersten Entfernung (D1) zwischen dem ersten Standort und dem zweiten Standort auf Grundlage der erlangten Positionsinformationen des ersten Standorts und der erlangten Positionsinformationen des zweiten Standorts, ohne dabei Karteninformationen zu verwenden;
Durchführen eines zweiten Entfernungserfassungsprozesses (S11-S15) zum Erfassen einer zweiten Entfernung (D2) zwischen dem ersten Standort und dem zweiten Standort unter Verwendung von Koppelnavigation auf Grundlage einer Schrittanzahl und einer Schrittlänge (X1) des Benutzers (P), wenn sich der Benutzer (P) von dem ersten Standort zu dem zweiten Standort bewegt, ohne dabei Karteninformationen zu verwenden; und
Durchführen eines Schrittlängenkorrekturprozesses (S21-S27) zum Korrigieren der Schrittlänge (X1) des Benutzers (P), die bei der Koppelnavigation verwendet wird, auf der Grundlage der ersten Entfernung (D1), die durch den ersten Entfernungserfassungsprozess erfasst wird, und der zweiten Entfernung (D2), die durch den zweiten Entfernungserfassungsprozess (S11-S15) erfasst wird,
**dadurch gekennzeichnet, dass** das Programm den Prozessor (111) ferner dazu veranlasst, einen Fehlererfassungsprozess zum Erfassen eines Fehlers in den aktuellen Positionsinformationen, die durch den satellitenbasierten Positionsinformationsberechnungsprozess berechnet werden, durchzuführen,
wobei nur dann, wenn der durch den Fehlererfassungsprozess erfasste Fehler kleiner als oder gleich einem vorgegebenen Schwellenwert ist, die durch den satellitenbasierten Positionsinformationsberechnungsprozess berechneten Positionsinformationen als gültig beim Erlangen der Positionsinformationen des ersten und des zweiten Standorts verwendet werden, und
wenn der durch den Fehlererfassungsprozess (S31) erfasste Fehler kleiner als oder gleich einem vorgegebenen Schwellenwert ist, Steuern (S34) der Ausgabeeinheit (119), um so die aktuellen Positionsinformationen des Benutzers (P), die durch den satellitenbasierten Positionsinformationsberechnungsprozess berechnet werden, auszugeben, und
wenn der durch den Fehlererfassungsprozess (S31) erfasste Fehler größer als ein vorgegebener Schwellenwert ist, Steuern (S33) der Ausgabeeinheit (119), um so aktuelle Positionsinformationen des Benutzers (P) auszugeben, die unter Verwendung der Koppelnavigation berechnet werden, wobei das Programm den Prozessor (111) ferner dazu veranlasst, den vorgegebenen Schwellenwert auf einen größeren Schwellenwert zu erhöhen, wenn die Ausgabeeinheit (119) dazu gesteuert wurde, die aktuellen Positionsinformationen des Benutzers (P), die unter Verwendung der Koppelnavigation berechnet wurden, dauerhaft für mehr als einen vorgegebenen Zeitraum oder eine vorgegebene Entfernung auszugeben.

## Revendications

1. Dispositif électronique (1) comprenant :
une unité de sortie (119) ; un processeur (111) ; et
une première unité de stockage (112, 113, 120) qui stocke les programmes devant être exécutés par le processeur (111),
ledit processeur (111) lisant les programmes stockés sur la première unité de stockage (112, 113, 120) de façon à effectuer ce qui suit lorsqu'un utilisateur (P) se déplace :
l'acquisition des informations de position d'un premier emplacement de l'utilisateur (P) qui est déterminé à l'aide des ondes radio provenant de satellites de navigation ;
l'acquisition des informations de position d'un second emplacement vers lequel l'utilisateur (P) s'est rendu à partir du premier emplacement, les informations de position du second emplacement étant déterminées à l'aide des ondes radio provenant de satellites de navigation ;
la réalisation d'un premier processus d'obtention de distance pour l'obtention, sans utiliser d'informations cartographiques, d'une première distance (D1) entre le premier emplacement et le second emplacement sur la base des informations de position acquises du premier emplacement et des informations de position acquises du second emplacement ;
la réalisation d'un second processus d'obtention de distance (S11 -S15) pour l'obtention, sans utiliser les informations cartographiques, d'une seconde distance (D2) entre le premier emplacement et le second emplacement, à l'aide de la navigation à l'estime sur la base d'un nombre de pas et d'une longueur de pas (X1) de l'utilisateur (P) lorsque l'utilisateur (P) s'est déplacé à partir du premier emplacement jusqu'au second emplacement ; et
la réalisation d'un processus de correction de longueur de pas (S21-S27) pour la correction de la longueur de pas (X1) de l'utilisateur (P) qui est utilisée dans la navigation à l'estime sur la base de la première distance (D1) obtenue par le premier processus d'obtention de distance et de la seconde distance (D2) obtenue par le second processus d'obtention de distance (S11-S15),
**caractérisé en ce que**
le processeur (111) exécute un processus d'obtention d'erreur (S31) pour l'obtention d'une erreur dans les informations de position actuelles calculées par le processus de calcul d'informations de position par satellites, et uniquement lorsque l'erreur obtenue par le processus d'obtention d'erreur (S31) est inférieure ou égale à une valeur seuil prescrite, le processeur (111) utilise les informations de position calculées par le processus de calcul d'informations de position par satellites comme valides pour l'acquisition des informations de position des premier et second emplacements, et le processeur (111) réalise ce qui suit :
lorsque l'erreur obtenue par le processus d'obtention d'erreur (S31) est inférieure ou égale à la valeur seuil prescrite, la commande (S34) de l'unité de sortie (119) de façon à délivrer en sortie les informations de position actuelles de l'utilisateur (P) calculées par le processus de calcul d'informations de position par satellites, et
lorsque l'erreur obtenue par le processus d'obtention d'erreur (S31) est supérieure à la valeur prescrite, la commande (S33) de l'unité de sortie (119) de façon à délivrer en sortie des informations de position actuelles de l'utilisateur (P) qui sont calculées à l'aide de la navigation à l'estime,
ledit processeur (111) exécutant un processus de changement d'augmentation de la valeur seuil prescrite jusqu'à une valeur seuil plus grande lorsque l'unité de sortie (119) a été commandée par le processeur (111) pour délivrer en sortie les informations de position actuelles de l'utilisateur (P) calculées à l'aide de la navigation à l'estime de manière continue pendant plus qu'un temps prescrit ou une distance prescrite.

2. Dispositif électronique selon la revendication 1, dans le second processus d'obtention de distance (S11-S15), ledit processeur (111) utilisant les informations de position acquises du premier emplacement déterminées à l'aide des ondes radio provenant des satellites de navigation en tant qu'emplacement de départ de la navigation à l'estime vers le second emplacement, et calculant les informations de position du second emplacement à l'aide de la navigation à l'estime sur la base du nombre de pas et de la longueur de pas (X1) de l'utilisateur (P).

3. Dispositif électronique selon la revendication 2, après que le processus de correction de longueur de pas (S21-S27) est réalisé pour corriger la longueur de pas (X2), ledit processeur (111) utilisant la longueur de pas corrigée (X2) dans le calcul d'une position de l'utilisateur (P) par la navigation à l'estime.

4. Dispositif électronique selon la revendication 3, comprenant en outre :
une seconde unité de stockage (171, 172, 173), qui est une unité de stockage séparée de la première unité de stockage (112, 113), ou une partie de la première unité de stockage (120),
ledit processeur (111) réalisant ce qui suit :
lorsque l'erreur obtenue par le processus d'obtention d'erreur (S31) est inférieure ou égale à la valeur seuil prescrite, l'entraînement (S34) du stockage, dans la seconde unité de stockage (171), des informations de position actuelles de l'utilisateur (P) calculées par le processus de calcul d'informations de position par satellite, et
lorsque l'erreur obtenue par le processus d'obtention d'erreur (S31) est supérieure à la valeur prescrite, l'entraînement (S33) du stockage, dans la seconde unité de stockage (172), d'informations de position actuelles de l'utilisateur (P) qui sont calculées à l'aide de la navigation à l'estime.

5. Dispositif électronique selon la revendication 1 à 4, comprenant en outre :
un unité de transmetteur (121) ;
ledit processeur (111) réalisant ce qui suit :
lorsque l'erreur obtenue par le processus d'obtention d'erreur (S31) est inférieure ou égale à la valeur de seuil prescrite, l'entraînement (S34) de la transmission, par l'unité de transmetteur (121), des informations de position actuelles de l'utilisateur (P) calculées par le processus de calcul d'informations de position par satellites, et
lorsque l'erreur obtenue par le processus d'obtention d'erreur (S31) est supérieure à la valeur prescrite, l'entraînement (S33) de la transmission, par l'unité de transmetteur (121), d'informations de position actuelles de l'utilisateur (P) qui sont calculées à l'aide de la navigation à l'estime.

6. Dispositif électronique selon l'une quelconque des revendications 1 à 5, ledit processeur (111) déterminant si l'utilisateur (P) a marché à parti du premier emplacement jusqu'au second emplacement, et uniquement lorsque le processeur (111) détermine que l'utilisateur (P) a marché, ledit processeur (111) exécutant le second processus d'obtention de distance (S11-S15) par la navigation à l'estime.

7. Procédé de correction d'une erreur dans la navigation à l'estime réalisé par un processeur (111) dans un dispositif électronique, ledit dispositif électronique comprenant une unité de sortie (119), le procédé comprenant :
l'acquisition (S1-S3) des informations de position d'un premier emplacement d'un utilisateur (P) qui est déterminé à l'aide des ondes radio provenant de satellites de navigation ;
l'acquisition des informations de position d'un second emplacement vers lequel l'utilisateur (P) s'est rendu à partir du premier emplacement, les informations de position du second emplacement étant déterminées à l'aide des ondes radio provenant de satellites de navigation ;
la réalisation d'un premier processus d'obtention de distance pour l'obtention, sans utiliser d'informations cartographiques, d'une première distance (D1) entre le premier emplacement et le second emplacement sur la base des informations de position acquises du premier emplacement et des informations de position acquises du second emplacement ;
la réalisation d'un second processus d'obtention de distance (S11-S15) pour l'obtention, sans utiliser les informations cartographiques, d'une seconde distance (D2) entre le premier emplacement et le second emplacement, à l'aide de la navigation à l'estime sur la base d'un nombre de pas et d'une longueur de pas (X1) de l'utilisateur (P) lorsque l'utilisateur (P) s'est déplacé à partir du premier emplacement jusqu'au second emplacement ; et
la réalisation d'un processus de correction de longueur de pas (S21-S27) pour la correction de la longueur de pas (X1) de l'utilisateur (P) qui est utilisée dans la navigation à l'estime sur la base de la première distance (D1) obtenue par le premier processus d'obtention de distance et de la seconde distance (D2) obtenue par le second processus d'obtention de distance (S11-S15),
**caractérisé en ce que** le procédé comprend en outre :
la réalisation d'un processus d'obtention d'erreur pour l'obtention d'une erreur dans les informations de position actuelles calculées par le processus de calcul d'informations de position par satellites,
uniquement lorsque l'erreur obtenue par le processus d'obtention d'erreur est inférieure ou égale à une valeur seuil prescrite, lesdites informations de position calculées par le processus de calcul d'informations de position par satellites étant utilisées comme valides dans l'acquisition des informations de position des premier et second emplacements, et
lorsque l'erreur obtenue par le processus d'obtention d'erreur (S31) est inférieure ou égale à la valeur seuil prescrite, la commande (S34) de l'unité de sortie (119) de façon à délivrer en sortie les informations de position actuelles de l'utilisateur (P) calculées par le processus de calcul d'informations de position par satellites, et
lorsque l'erreur obtenue par le processus d'obtention d'erreur (S31) est supérieure à la valeur prescrite, la commande (S33) de l'unité de sortie (119) de façon à délivrer en sortie des informations de position actuelles de l'utilisateur (P) qui sont calculées à l'aide de la navigation à l'estime, ledit procédé comprenant en outre :
l'augmentation de la valeur seuil prescrite jusqu'à une valeur seuil plus grande lorsque l'unité de sortie (119) a été commandée pour délivrer en sortie des informations de position actuelles de l'utilisateur (P) calculées à l'aide de la navigation à l'estime de manière continue pendant plus d'un temps prescrit ou d'une distance prescrite.

8. Procédé de correction d'une erreur selon la revendication 7, dans le second processus d'obtention de distance (S11-S15), lesdites informations de position acquises du premier emplacement déterminé à l'aide des ondes radio provenant des satellites de navigation étant utilisées en tant qu'emplacement de départ de la navigation à l'estime vers le second emplacement, et lesdites informations de position du second emplacement étant calculées à l'aide de la navigation à l'estime sur la base du nombre de pas et de la longueur de pas (X1) de l'utilisateur (P).

9. Procédé de correction d'une erreur selon la revendication 8, comprenant en outre :
après la réalisation du processus de correction de longueur de pas (S21-S27), le calcul d'une position de l'utilisateur (P) par la navigation à l'estime à l'aide de la longueur de pas corrigée (X2).

10. Procédé de correction d'une erreur selon la revendication 9,
ledit dispositif électronique comprenant une unité de stockage, et ledit procédé comprenant en outre :
lorsque l'erreur obtenue par le processus d'obtention d'erreur (S31) est inférieure ou égale à la valeur seuil prescrite, l'entraînement (S34) du stockage, dans l'unité de stockage (171), des informations de position actuelles de l'utilisateur (P) calculées par le processus de calcul d'informations de position par satellites, et
lorsque l'erreur obtenue par le processus d'obtention d'erreur (S31) est supérieure à la valeur prescrite, l'entraînement du stockage (S33), dans l'unité de stockage (172), d'informations de position actuelles de l'utilisateur (P) calculées à l'aide de la navigation à l'estime.

11. Procédé de correction d'une erreur selon les revendications 7 à 10,
ledit dispositif électronique comprenant une unité de transmetteur (121), et ledit procédé comprenant en outre :
lorsque l'erreur obtenue par le processus d'obtention d'erreur (S31) est inférieure ou égale à la valeur de seuil prescrite, l'entraînement (S34) de la transmission, par l'unité de transmetteur (121), des informations de position actuelles de l'utilisateur (P) calculées par le processus de calcul d'informations de position par satellites, et
lorsque l'erreur obtenue par le processus d'obtention d'erreur (S31) est supérieure à la valeur prescrite, l'entraînement (S33) de la transmission, par l'unité de transmetteur (121), d'informations de position actuelles de l'utilisateur (P) qui sont calculées à l'aide de la navigation à l'estime.

12. Support de stockage non transitoire lisible par ordinateur sur lequel est stocké un programme devant être exécutable par un processeur (111) d'un dispositif électronique, ledit dispositif électronique comprenant une unité de sortie (119), le programme amenant le processeur (111) à réaliser ce qui suit :
l'acquisition (S1-S3) des informations de position d'un premier emplacement d'un utilisateur (P) qui est déterminé à l'aide des ondes radio provenant de satellites de navigation ;
l'acquisition des informations de position d'un second emplacement vers lequel l'utilisateur (P) s'est déplacé à partir du premier emplacement, les informations de position du second emplacement étant déterminées à l'aide des ondes radio provenant de satellites de navigation ;
la réalisation d'un premier processus d'obtention de distance pour l'obtention, sans utiliser d'informations cartographiques, d'une première distance (D1) entre le premier emplacement et le second emplacement sur la base des informations de position acquises du premier emplacement et des informations de position acquises du second emplacement ;
la réalisation d'un second processus d'obtention de distance (S11-S15) pour l'obtention, sans utiliser les informations cartographiques, d'une seconde distance (D2) entre le premier emplacement et le second emplacement, à l'aide de la navigation à l'estime sur la base d'un nombre de pas et d'une longueur de pas (X1) de l'utilisateur (P) lorsque l'utilisateur (P) s'est déplacé à partir du premier emplacement jusqu'au second emplacement ; et
la réalisation d'un processus de correction de longueur de pas (S21-S27) pour la correction de la longueur de pas (X1) de l'utilisateur (P) qui est utilisée dans la navigation à l'estime sur la base de la première distance (D1) obtenue par le premier processus d'obtention de distance et de la seconde distance (D2) obtenue par le second processus d'obtention de distance (S11-S15),
**caractérisé en ce que** le programme amène en outre le processeur (111) à réaliser un processus d'obtention d'erreur pour l'obtention d'une erreur dans les informations de position actuelles calculées par le processus de calcul d'informations de position par satellites,
uniquement lorsque l'erreur obtenue par le processus d'obtention d'erreur est inférieure ou égale à une valeur seuil prescrite, lesdites informations de position calculées par le processus de calcul d'informations de position par satellites étant utilisées comme valides dans l'acquisition des informations de position des premier et second emplacements, et
lorsque l'erreur obtenue par le processus d'obtention d'erreur (S31) est inférieure ou égale à la valeur seuil prescrite, la commande (S34) de l'unité de sortie (119) de façon à délivrer en sortie les informations de position actuelles de l'utilisateur (P) calculées par le processus de calcul d'informations de position par satellites, et
lorsque l'erreur obtenue par le processus d'obtention d'erreur (S31) est supérieure à la valeur prescrite, la commande (S33) de l'unité de sortie (119) de façon à délivrer en sortie des informations de position actuelles de l'utilisateur (P) qui sont calculées à l'aide de la navigation à l'estime, ledit programme amenant en outre le processeur (111) à augmenter la valeur seuil prescrite jusqu'à une valeur seuil plus grande lorsque l'unité de sortie (119) a été commandée de délivrer en sortie les informations de position actuelles de l'utilisateur (P) calculées à l'aide de la navigation à l'estime de manière continue pour plus d'un temps prescrit ou d'une distance prescrite.
